# EUROPÄISCHE PATENTSCHRIFT

(11) **EP 3 625 632 B1**
(45) Veröffentlichungstag und Bekanntmachung des Hinweises auf die Patenterteilung: **10.07.2024**
(21) Anmeldenummer: 18725803.3
(22) Anmeldetag: 15.05.2018
(51) Int. Cl.: G06Q 10/06, G06Q 10/10

(54) **VORRICHTUNG UND VERFAHREN ZUR BEARBEITUNG VON ERZEUGNISSEN**
DEVICE AND METHOD FOR OPTIMISING PRODUCTION
DISPOSITIF ET PROCÉDÉ D'OPTIMISATION DE LA PRODUCTION

(30) Priorität: 19.05.2017 DE 102017110997
(43) Veröffentlichungstag der Anmeldung: 25.03.2020
(73) Patentinhaber: HOMAG Plattenaufteiltechnik GmbH, 75365 Calw (DE)
(72) Erfinder: WEHRLE, Boris, 71116 Gärtringen (DE)
(74) Vertreter: DREISS Patentanwälte PartG mbB
(86) Internationale Anmeldenummer: PCT/EP2018/062534
(87) Internationale Veröffentlichungsnummer: WO 2018/210816

(56) Entgegenhaltungen:
- US-A1- 2015 081 077
- US-A1- 2017 031 335

## Beschreibung

Die Erfindung betrifft eine Vorrichtung und ein Verfahren zur Bearbeitung von Erzeugnissen, die Platten bzw. plattenförmigen Werkstücken sind.

Derartige Vorrichtungen umfassen Fertigungszellen in denen Bearbeitungsprozesses als Teile eines Verfahrens zur Bearbeitung von Erzeugnissen ablaufen.

Fertigungsprozesse in der Möbelindustrie werden durch Fertigungsleitsysteme hinsichtlich Auslieferungsterminen sowie hinsichtlich einzelner Kenngrößen wie z.B. Verschnitt optimiert.

DE 10 2015 214 673 A1 offenbart ein derartiges Produktionssystem und ein entsprechendes Verfahren.

US 2015/081077 A1 offenbart bereits eine Vorrichtung gemäß dem Oberbegriff von Anspruch 1. Dabei offenbart US 2015/081077 A1 Systeme und Methoden zur Verwaltung von Produktionsressourcen, einschließlich der Planung von Produktionsereignissen für Produktionsressourcen, die zur Herstellung von Produkten verwendet werden, in Bezug auf Zeitintervalle, wobei die Zusammenarbeit zwischen den Produktionsressourcen aufrechterhalten wird.

Wünschenswert sind eine demgegenüber verbesserte Vorrichtung und ein demgegenüber verbessertes Verfahren, die jeweils für Platten bzw. plattenförmige Werkstücke geeignet sind.

Dies wird durch die Vorrichtung und das Verfahren nach den unabhängigen Ansprüchen erreicht.

Die erfindungsgemäße Vorrichtung ist im Anspruch 1 definiert.

Die Möglichkeiten einzelner Fertigungszellen, sowie gegenseitige Einflüsse von Fertigungszellen aufeinander, werden dadurch in einer zentralen Recheneinrichtung berücksichtigt. Durch eine Optimierung der Fertigungsreihenfolge von Schnittplänen und/oder Änderungen der Schnittpläne (Fertigungsreihenfolge der Teile eines Schnittplans) können Rüstzeiten vermindert, der Gesamtdurchsatz erhöht, der Energieverbrauch reduziert, Verschleiß minimiert sowie durch eine Zusammenfassung von Bedienerinteraktionen Freiräume geschaffen werden.

Vorzugsweise ist die Schnittstelle ausgebildet, eine Anfrage an wenigstens eine der mehreren Fertigungszellen zu übertragen, mit der Information über den wenigstens einen Fertigungsparameter von der wenigstens einen der mehreren Fertigungszellen angefordert wird.

Beispielsweise wird eine Anfrage regelmäßig gesendet, um Fertigungsparameter aktuell zu halten.

Die Fertigungsanweisung gibt erfindungsgemäß die Fertigungsreihenfolge vor. Dabei bestimmt die Fertigungsanweisung vorzugsweise die Fertigungsreihenfolge in der das Erzeugnis innerhalb einer der mehreren Fertigungszellen bearbeitet wird oder eine Fertigungszellen-Reihenfolge in der das Erzeugnis durch die mehreren Fertigungszellen bearbeitet wird, soweit eine Änderung der Fertigungsreihenfolge technisch sinnvoll bzw. möglich ist (beispielsweise, ob eine Abstapelung unmittelbar nach der Aufteilung der Platten oder erst nach der Kantenbearbeitung der aufgeteilten Platten erfolgen soll). Die Fertigungsreihenfolge oder die Fertigungszellen-Reihenfolge wird dadurch optimierbar.

Vorzugsweise bestimmt die Fertigungsanweisung eine Auswahl zwischen mehreren gleichartigen Fertigungszellen, mit denen das Erzeugnis bearbeitet werden soll (beispielsweise, ob eine Platte aus dem Plattenlager in Abhängigkeit vom jeweiligen Aufteilplan mit einer Winkelanlage mit zwei Sägeeinrichtungen oder einer Plattenaufteilanlage mit nur einer Sägeeinrichtung und einer Rücktransporteinrichtung aufgeteilt werden soll). Die Gesamtkapazität der Fertigungszellen wird dadurch optimierbar.

Vorzugsweise bestimmt die Fertigungsanweisung eine Bearbeitungsreihenfolge von wenigstens zwei verschiedenen Erzeugnissen innerhalb einer der mehreren Fertigungszellen oder durch die mehreren Fertigungszellen. Die Erzeugnisreihenfolge wird dadurch optimierbar.

Vorzugsweise umfasst die Anfrage Information über die wenigstens zwei verschiedenen Erzeugnisse, wobei in Erwiderung der Anfrage Information über Fertigungsparameter für die wenigstens zwei verschiedenen Erzeugnisse übertragen wird. Die einzelnen Fertigungszellen können selbst Optimierungen für verschiedene Erzeugnisse unterstützen sowie die Fertigungsdauer des bevorstehenden Auftrags ermitteln. Die Anfrage für mehrere Erzeugnisse überträgt Information über die jeweiligen Erzeugnisse an die Fertigungszellen. Eine entsprechende Erwiderung enthält entsprechend differenzierte Fertigungsparameter.

Vorzugsweise umfasst der Fertigungsparameter Information über eine Fertigungsdauer für eine Bearbeitung des Erzeugnisses.

Vorzugsweise umfasst die Fertigungsanweisung Information über einen Fertigungsplan für eine Bearbeitung des Erzeugnisses in wenigstens einer der mehreren Fertigungszellen. Die einzelnen Fertigungszellen können so situationsbeding unterschiedliche Fertigungspläne erhalten.

Vorzugsweise wird die Fertigungsanweisung abhängig von wenigstens einer Zeitdauer bestimmt, die eine Transportdauer zwischen zwei der mehreren Fertigungszellen charakterisiert. Durch eine von der Transportdauer abhängige Veränderung der Fertigungszellen-Reihenfolge soweit dies fertigungstechnisch möglich ist bzw. durch eine von der Transportdauer abhängige Auswahl zwischen gleichartigen Fertigungszellen wird die Fertigungsdauer insgesamt verkürzbar.

Vorzugsweise ist die Schnittstelle ausgebildet, Information über ein Ende einer ersten Bearbeitung des Erzeugnisses an einer ersten Fertigungszelle zu empfangen, und Information über einen Beginn einer zweiten Bearbeitung des Erzeugnisses an einer zweiten Fertigungszelle zu empfangen, wobei die Recheneinrichtung ausgebildet ist die Zeitdauer in einem ersten Vorgang zur Bearbeitung eines ersten Erzeugnisses abhängig von der Information über das Ende und der Information über den Beginn zu messen, und die Zeitdauer zur Bestimmung der Fertigungsanweisung für ein zweites Erzeugnis in einem zweiten Vorgang zu verwenden. Die Transportdauer wird damit automatisch ermittelt.

Vorzugsweise ist die Schnittstelle ausgebildet, Information über einen Beginn einer ersten Bearbeitung des Erzeugnisses an einer ersten Fertigungszelle zu empfangen, und Information über ein Ende der ersten Bearbeitung des Erzeugnisses an der ersten Fertigungszelle zu empfangen, wobei die Recheneinrichtung ausgebildet ist die Fertigungsdauer in einem ersten Vorgang zur Bearbeitung eines ersten Erzeugnisses abhängig von der Information über den Beginn und der Information über das Ende zu messen, und die Fertigungsdauer zur Bestimmung der Fertigungsanweisung für ein zweites Erzeugnis in einem zweiten Vorgang zu verwenden. Die Bearbeitungsdauer in einer Fertigungszelle wird damit automatisch ermittelt.

Das erfindungsgemäße Verfahren ist im Anspruch 12 definiert.

Vorzugsweise wird eine Anfrage von der Schnittstelle an wenigstens eine der mehreren Fertigungszellen übertragen, mit der Information über den wenigstens einen Fertigungsparameter von der wenigstens einen der mehreren Fertigungszellen angefordert wird.

Vorzugsweise umfasst die Anfrage Information über die wenigstens zwei verschiedenen Erzeugnisse, wobei in Erwiderung der Anfrage Information über Fertigungsparameter für die wenigstens zwei verschiedenen Erzeugnisse übertragen wird.

Vorzugsweise umfasst der Fertigungsparameter Information über eine Fertigungsdauer für eine Bearbeitung des Erzeugnisses.

Vorzugsweise umfasst die Fertigungsanweisung Information über einen Fertigungsplan für eine Bearbeitung des Erzeugnisses in wenigstens einer der mehreren Fertigungszellen.

Vorzugsweise wird die Fertigungsanweisung abhängig von wenigstens einer Zeitdauer bestimmt, die eine Transportdauer zwischen zwei der mehreren Fertigungszellen charakterisiert.

Vorzugsweise wird an der Schnittstelle Information über ein Ende einer ersten Bearbeitung des Erzeugnisses an einer ersten Fertigungszelle empfangen, wobei an der Schnittstelle Information über einen Beginn einer zweiten Bearbeitung des Erzeugnisses an einer zweiten Fertigungszelle empfangen wird, wobei die Zeitdauer von der Recheneinrichtung in einem ersten Vorgang zur Bearbeitung eines ersten Erzeugnisses abhängig von der Information über das Ende und der Information über den Beginn gemessen wird, und wobei die Zeitdauer zur Bestimmung der Fertigungsanweisung für ein zweites Erzeugnis in einem zweiten Vorgang verwendet wird.

Vorzugsweise wird an der Schnittstelle Information über einen Beginn einer ersten Bearbeitung des Erzeugnisses an einer ersten Fertigungszelle empfangen, wobei an der Schnittstelle Information über ein Ende der ersten Bearbeitung des Erzeugnisses an der ersten Fertigungszelle empfangen wird, wobei die Fertigungsdauer von der Recheneinrichtung in einem ersten Vorgang zur Bearbeitung eines ersten Erzeugnisses abhängig von der Information über den Beginn und der Information über das Ende gemessen wird, und wobei die Fertigungsdauer zur Bestimmung der Fertigungsanweisung für ein zweites Erzeugnis in einem zweiten Vorgang verwendet wird.

Weitere Ausgestaltungen ergeben sich aus der folgenden Beschreibung und der Zeichnung. In der Zeichnung zeigt
Fig. 1 schematisch eine Vorrichtung zur Bearbeitung von Erzeugnissen am Beispiel von plattenförmigen Werkstücken,
Fig. 2 schematisch eine sequentielle Bearbeitung eines plattenförmigen Werkstücks,
Fig. 3 schematisch ein Verfahren zur Bearbeitung von Erzeugnissen.

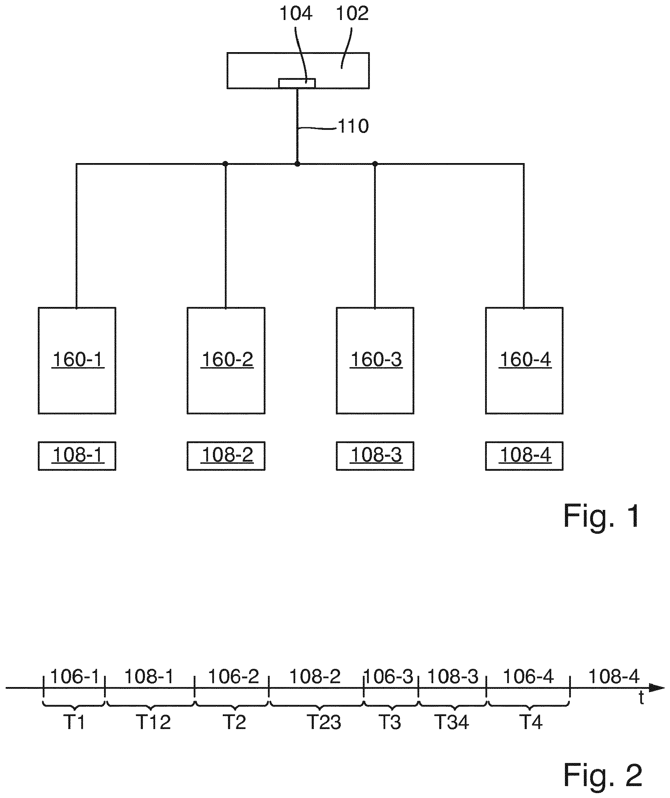

Figur 1 zeigt schematisch eine Vorrichtung zur Bearbeitung von Erzeugnissen. Es handelt sich bei den Erzeugnissen um Werkstücke in Form von Platten.

Die Vorrichtung umfasst eine Recheneinrichtung 102 und eine Schnittstelle 104. Die Recheneinrichtung 102 ist beispielsweise eine Speicherprogrammierbare Steuerung. Die Schnittstelle 104 ist ausgebildet, mit mehreren voneinander räumlich beabstandeten und/oder verketten Fertigungszellen und der Recheneinrichtung 102 zu kommunizieren.

Eine erste Fertigungszelle 106-1 umfasst beispielsweise ein Lager. Durch das Lager werden beispielsweise Platten verwaltet, die in Stapeln übereinander gestapelt sind. Eine Reihenfolge, in der die Platten eines Stapels übereinander gestapelt sind, ist beispielsweise im Lager in einer Datenbank gespeichert. Das Lager ist beispielsweise ausgebildet, den Stapel mittels einer Stapeleinrichtung umzustapeln, bis eine bestimmte Platte oben auf dem Stapel liegt, diese Platte zu greifen, und auf eine erste Transporteinheit 108-1 zu bewegen. Es kann auch vorgesehen sein, dass ein Mensch bzw. ein Lagerist die Platte auf die erste Transporteinheit 108-1 bewegt, wenn diese oben auf dem Stapel liegt.

Die erste Transporteinheit 108-1 ist ausgebildet, die Platten von der ersten Fertigungszelle 106-1 zu einer zweiten Fertigungszelle 106-2 zu transportieren. Die erste Transporteinheit 108-1 kann beispielsweise eine Rollenfördereinrichtung umfassen. Als erste Transporteinheit 108-1 kann auch ein Wagen vorgesehen sein, der durch einen Benutzer bewegbar ist.

Die zweite Fertigungszelle 106-2 umfasst beispielsweise eine Sägeeinrichtung. Die Sägeeinrichtung ist ausgebildet Platten aufzuteilen, d.h. zu sägen. Die Sägeeinrichtung ist beispielsweise ferner ausgebildet, Platten von der ersten Transporteinheit 108-1 zu greifen und/oder Teile von Platten nach dem Sägen auf eine zweite Transporteinheit 108-2 zu bewegen. Es kann auch vorgesehen sein, dass ein Mensch bzw. ein Maschinenbediener die Teile der Platten auf die zweite Transporteinheit 108-2 bewegt bzw. legt, wenn diese gesägt sind.

Die zweite Transporteinheit 108-2 ist ausgebildet, die Platten von der zweiten Fertigungszelle 106-2 zu einer dritten Fertigungszelle 106-3 zu transportieren. Die zweite Transporteinheit 108-2 kann beispielsweise ebenfalls eine Rollenfördereinrichtung umfassen. Als zweite Transporteinheit 108-2 kann auch ein Wagen vorgesehen sein, der durch einen Benutzer bewegbar ist.

Die dritte Fertigungszelle 106-3 umfasst beispielsweise eine Abstapeleinrichtung. Die Abstapeleinrichtung ist ausgebildet Teile der Platten abzustapeln und/oder zu sortieren. Die Abstapeleinrichtung ist beispielsweise ausgebildet, Teile von den Platten von der zweiten Transporteinheit 108-2 für eine Abstapelung zu greifen und/oder Teile von den Platten nach der Entnahme von der Abstapeleinrichtung auf eine dritte Transporteinheit 108-3 zu bewegen.

Die dritte Transporteinheit 108-3 ist ausgebildet, die Platten von der dritten Fertigungszelle 106-3 zu einer vierten Fertigungszelle 106-4 zu transportieren. Die dritte Transporteinheit 108-3 kann beispielsweise ebenfalls eine Rollenfördereinrichtung umfassen. Als dritte Transporteinheit 108-3 kann auch ein Wagen vorgesehen sein, der durch einen Benutzer bewegbar ist.

Die vierte Fertigungszelle 106-4 umfasst beispielsweise eine Kanten-Bearbeitungs-Einrichtung. Die Kanten-Bearbeitungs-Einrichtung ist ausgebildet, Kanten der Teile der Platten nach dem Sägen zu bearbeiten und/oder mit einem Kantenband zu beschichten. Die Kanten-Bearbeitungs-Einrichtung ist beispielsweise ausgebildet, die Teile von den Platten von der dritten Transporteinheit 108-3 für eine Bearbeitung zu greifen und/oder die Teile von den Platten nach dem Bearbeiten auf eine vierte Transporteinheit 108-4 zu bewegen.

Im Beispiel sind vier Fertigungszellen einer Fertigungslinie für eine Holzbearbeitung beschrieben, die unterschiedliche und/oder gleichartige Bearbeitungseinrichtungen wie Bohrautomaten, Fräsmaschinen, Bearbeitungszentren, Handling-, Montage - und Verpackungseinrichtungen beinhalten kann. Es können auch andere Fertigungszellen und mehr oder weniger Fertigungszellen vorgesehen sein.

Die Bearbeitung des Werksstücks in Form der Platten in den Fertigungszellen erfolgt in einer vorgebbaren Reihenfolge.

Eine Fertigungsanweisung gibt die Reihenfolge vor. Die Fertigungsanweisung ist beispielsweise ein Schnittplan, in dem die Lage der Teile der Platten auf einer Platte aufgezeigt wird. Zur Aufteilung einer Platte kann es möglich sein, dieselben Teile der Platte mit unterschiedlichen Schnittplänen zu erhalten.

Werden mehr Teile desselben Materials benötigt, als aus einer Platte dieses Materials erhältlich sind, kann ein Schnittplan mehrere Platten umfassen. Dann ist es möglich, die Teile von Platten, die aus verschiedenen der mehreren Platten zu sägen sind, auf unterschiedliche Art zu den Platten zuzuordnen.

Unterschiedliche Schnittpläne können eine unterschiedliche Anzahl Sägevorgänge oder Drehvorgänge für eine Platte oder gegebenenfalls mehrere Platten erfordern. Das Sägen nach unterschiedlichen Schnittplänen kann unterschiedlich viel Zeit beanspruchen. Bei unterschiedlichen Schnittplänen kann unterschiedlicher Verschnitt auftreten.

Werden Teile unterschiedlichen Materials benötigt, können verschiedene Schnittpläne für die verschiedenen zu sägenden Platten vorgesehen sein. Dann kann auch eine Reihenfolge, in der die Platten durch die Fertigungszellen 106-1, ..., 106-4 bearbeitet werden, vorgegeben werden.

Die Fertigungszellen 106-1, ..., 106-4 sind über Datenleitungen 110 mit der Schnittstelle 104 verbunden. Die Verbindung ist beispielsweise eine drahtlose oder drahtgebundene Verbindung nach dem Internet Protocol/Transmission Control Protocol. Es kann auch eine andere Verbindung, beispielsweise ein Feldbussystem eingesetzt werden.

Die Schnittstelle 104 ist ausgebildet, Information über wenigstens einen Fertigungsparameter von wenigstens einer der mehreren Fertigungszellen 106-1, ..., 106-4 zu empfangen. Die Fertigungszellen 106-1, ..., 106-4 sind ausgebildet, diese Information zu senden. Die Fertigungszellen 106-1, ..., 106-4 können für Einzelfälle die Bearbeitungsdauer bevorstehender Aufträge ermitteln.

Das Lager sendet beispielsweise als Fertigungsparameter eine Information über eine Reihenfolge, in der die Platten momentan gestapelt sind und/oder eine Information darüber, wann eine bestimmte der gestapelten Platten bereitgestellt werden kann.

Die Säge sendet beispielsweise als Fertigungsparameter eine Information über eine Reihenfolge, in der eine Platte für einen bestimmten Schnittplan zu sägen oder zu drehen ist, bis der bestimmte Schnittplan umgesetzt ist und/oder eine Information darüber, wie lange es dauert bzw. gedauert hat, bis ein bestimmter Schnittplan an der Säge umgesetzt ist bzw. umgesetzt wurde.

Die Abstapeleinrichtung sendet beispielsweise als Fertigungsparameter eine Information über eine Reihenfolge, in der die Teile aufgeteilter Platten für bestimmte Schnittpläne abgestapelt werden sollen und/oder eine Information darüber, wie lange es dauert bzw. gedauert hat bis das Abstapeln für einen bestimmten Schnittplan umgesetzt ist bzw. umgesetzt wurde.

Die Kanten-Bearbeitungs-Einrichtung sendet beispielsweise als Fertigungsparameter eine Information über eine Reihenfolge, in der die Kanten von Teilen einer Platte für einen bestimmten Schnittplan zu bearbeiten sind und/oder eine Information darüber, wie lange es dauert bzw. gedauert hat, bis die Kanten für bestimmte Teile von Platten bearbeitet sind bzw. bearbeitet wurden.

Das bedeutet der Fertigungsparameter, der von eine der Fertigungszellen 106-1, ..., 106-4 übertragen wird, umfasst beispielsweise eine Information über eine Fertigungsdauer für eine Bearbeitung des Werkstücks in dieser Fertigungszelle 106-1, ..., 106-4.

Die Recheneinrichtung 102 ist ausgebildet, abhängig von wenigstens einem Fertigungsparameter die Fertigungsanweisung für wenigstens eine der mehreren Fertigungszellen 106-1, ..., 106-4 zu bestimmen.

Die Schnittstelle 104 ist ausgebildet, eine Information über die wenigstens eine Fertigungsanweisung zur Vorgabe der Reihenfolge an die Fertigungszellen 106-1, ..., 106-4 zu übertragen.

Die Fertigungszellen 106-1, ..., 106-4 sind ausgebildet, die Fertigungsanweisung nach Erhalt umzusetzen.

Das bedeutet, die Fertigungsanweisung umfasst eine Information über einen Fertigungsplan für eine Bearbeitung des Werkstücks in wenigstens der Fertigungszelle 106-1, ..., 106-4, an welche die Fertigungsanweisung übertragen wird. Die einzelnen Fertigungszellen können so situationsbedingt unterschiedliche Fertigungspläne erhalten.

Die Möglichkeiten einzelner Fertigungszellen 106-1, ..., 106-4, sowie gegeneinseitige Einflüsse von Fertigungszellen 106-1, ..., 106-4 aufeinander werden dadurch in einer zentralen Recheneinrichtung 102 berücksichtigt. Durch eine Optimierung der Fertigungsreihenfolge können Rüstzeiten vermindert, der Gesamtdurchsatz erhöht, der Energieverbrauch reduziert und/oder Verschleiß minimiert werden. Durch eine Zusammenfassung von Bedienerinteraktionen Freiräume werden geschaffen.

Die Fertigungsanweisung umfasst beispielsweise den Schnittplan oder eine Fertigungsreihenfolge, in der das Werkstück, beispielsweise die Platte, innerhalb einer der Fertigungszellen 106-1, ..., 106-4 bearbeitet werden soll. Die Fertigungsanweisung kann auch eine Fertigungszellen-Reihenfolge bestimmen, die angibt, in welcher Reihenfolge das Werkstück, beispielsweise die Platte, durch die mehreren Fertigungszellen 106-1, ..., 106-4 bearbeitet werden soll (beispielsweise, ob eine Abstapelung unmittelbar nach der Aufteilung der Platten oder erst nach der Kantenbearbeitung der aufgeteilten Platten erfolgen soll). Die Fertigungsreihenfolge oder die Fertigungszellen-Reihenfolge wird dadurch optimierbar.

Die Fertigungsanweisung kann auch eine Auswahl zwischen mehreren gleichartigen Fertigungszellen bestimmen, mit denen das Werkstück bearbeitet werden soll (beispielsweise, ob eine Platte aus dem Plattenlager in Abhängigkeit vom jeweiligen Aufteilplan mit einer Winkelanlage mit zwei Sägeeinrichtungen oder einer Plattenaufteilanlage mit nur einer Sägeeinrichtung und einer Rücktransporteinrichtung aufgeteilt werden soll). Die Gesamtkapazität der Fertigungszellen wird dadurch optimierbar.

Die Schnittstelle 104 kann ausgebildet sein, eine Anfrage an wenigstens eine der mehreren Fertigungszellen 106-1, ..., 106-4 zu übertragen, mit der Information über den wenigstens einen Fertigungsparameter von der wenigstens einen der mehreren Fertigungszellen angefordert wird. Beispielsweise wird eine Anfrage regelmäßig gesendet, um Fertigungsparameter aktuell zu halten.

Die Fertigungsanweisung kann eine Bearbeitungsreihenfolge von wenigstens zwei verschiedenen Werkstücken, beispielsweise Platten, innerhalb einer der Fertigungszellen 106-1, ..., 106-4 oder durch die mehreren Fertigungszellen 106-1, ..., 106-4 vorgeben. Dazu kann die Anfrage Information für verschiedene Werkstücke, beispielsweise ein Material der Platten oder einen jeweiligen Schnittplan, umfassen. In Erwiderung der Anfrage übertragen die Fertigungszellen 106-1, ..., 106-4 Information über Fertigungsparameter für die verschiedenen Werkstücke. Die einzelnen Fertigungszellen 106-1, ..., 106-4 können selbst Optimierungen für verschiedene Werkstücke unterstützen. Die Anfrage für mehrere Werkstücke überträgt Information über die jeweiligen Werkstücke. Eine entsprechende Erwiderung enthält entsprechend differenzierte Fertigungsparameter, der gegebenenfalls durch die Fertigungszelle selbst optimierte Abläufe wiedergibt.

Die Werkstückreihenfolge wird zur Optimierung der Freiräume für den Bediener festgelegt.

Die Werkstückreihenfolge wird außerdem beispielsweise zur Optimierung einer Ende-zu-Ende Verarbeitungsdauer festgelegt.

Zudem kann eine Transportdauer zwischen den Fertigungszellen 106-1, ..., 106-4 berücksichtigt werden.

Die Fertigungsanweisung wird beispielsweise abhängig von wenigstens einer Zeitdauer bestimmt, die eine Transportdauer zwischen zwei der mehreren Fertigungszellen 106-1, ..., 106-4 charakterisiert. Durch eine von der Transportdauer abhängige Veränderung der Fertigungszellen-Reihenfolge soweit technisch möglich wird die Fertigungsdauer insgesamt verkürzbar. Durch eine von der Transportdauer abhängige Auswahl zwischen gleichartigen Fertigungszellen kann ebenfalls die Fertigungsdauer insgesamt verkürzt werden. Beispielsweise ist ein Algorithmus zur Festlegung der Abläufe so ausgelegt, dass unter Berücksichtigung der ermittelten Transportdauern die Fertigungsdauer insgesamt verkürzt wird.

Die Schnittstelle 104 ist zudem ausgebildet, Information über ein Ende einer ersten Bearbeitung des Werkstücks, beispielsweise der Platte an einer ersten Fertigungszelle 106-1 zu empfangen, und Information über einen Beginn einer zweiten Bearbeitung des Werkstücks an einer zweiten Fertigungszelle 106-2 zu empfangen. Die erste Fertigungszelle 106-1 und die zweite Fertigungszelle 106-2 senden dazu eine entsprechende Information.

Die Recheneinrichtung 102 kann zudem ausgebildet sein, die Zeitdauer in einem ersten Vorgang zur Bearbeitung eines ersten Werkstücks abhängig von der Information über das Ende und der Information über den Beginn zu messen, und die Zeitdauer zur Bestimmung der Fertigungsanweisung für ein zweites Werkstück in einem zweiten Vorgang zu verwenden. Die Transportdauer zwischen der ersten Fertigungszelle 106-1 und der zweiten Fertigungszelle 106-2 wird damit automatisch ermittelt und für die Bestimmung der Fertigungsanweisung verwendet.

Zudem kann die Schnittstelle 104 ausgebildet sein, Information über einen Beginn der ersten Bearbeitung des Werkstücks an der ersten Fertigungszelle 106-1 zu empfangen. Die Recheneinrichtung 102 kann ausgebildet sein, die Fertigungsdauer in dem ersten Vorgang zur Bearbeitung des ersten Werkstücks abhängig von der Information über den Beginn und der Information über das Ende zu messen, und die Fertigungsdauer zur Bestimmung der Fertigungsanweisung für das zweite Werkstück im zweiten Vorgang zu verwenden. Die Bearbeitungsdauer in der ersten Fertigungszelle 106-1 wird damit automatisch ermittelt.

Im Beispiel wird eine Bearbeitungsdauer in allen Fertigungszellen 106-1, ..., 106-4 und eine Transportdauer zwischen allen Fertigungszellen 106-1, ..., 106-4 modelliert durch
T1 Bearbeitungsdauer in Fertigungszelle 106-1,
T2 Bearbeitungsdauer in Fertigungszelle 106-2,
T3 Bearbeitungsdauer in Fertigungszelle 106-3,
T4 Bearbeitungsdauer in Fertigungszelle 106-4.
T12 Transportdauer von Fertigungszelle 106-1 zu Fertigungszelle 106-2,
T21 Transportdauer von Fertigungszelle 106-2 zu Fertigungszelle 106-1,
T13 Transportdauer von Fertigungszelle 106-1 zu Fertigungszelle 106-3,
T31 Transportdauer von Fertigungszelle 106-3 zu Fertigungszelle 106-1,
T14 Transportdauer von Fertigungszelle 106-1 zu Fertigungszelle 106-4,
T41 Transportdauer von Fertigungszelle 106-4 zu Fertigungszelle 106-1,
T23 Transportdauer von Fertigungszelle 106-2 zu Fertigungszelle 106-3,
T32 Transportdauer von Fertigungszelle 106-3 zu Fertigungszelle 106-2,
T24 Transportdauer von Fertigungszelle 106-2 zu Fertigungszelle 106-4,
T42 Transportdauer von Fertigungszelle 106-4 zu Fertigungszelle 106-2,
T34 Transportdauer von Fertigungszelle 106-3 zu Fertigungszelle 106-4,
T43 Transportdauer von Fertigungszelle 106-4 zu Fertigungszelle 106-3.

In einem anderen Beispiel können auch nur die Transportdauern T1 bis T4 sowie T12, T23 und T34 modelliert sein (siehe auch nachfolgende Beschreibung zu Fig. 2).

In Figur 2 ist beispielhaft die sequentielle Bearbeitung des Werkstücks zuerst mit Bearbeitungsdauer T-1 in der ersten Fertigungszelle 106-1, dann mit Bearbeitungsdauer T-2 in der zweiten Fertigungszelle 106-2, dann mit Bearbeitungsdauer T-3 in der dritten Fertigungszelle 106-3, und dann mit Bearbeitungsdauer T-4 in der vierten Fertigungszelle 106-4 dargestellt. Der Transport erfolgt sequentiell mit der ersten Transporteinrichtung 108-1 von der ersten Fertigungszelle 106-1 zur zweiten Fertigungszelle 106-2 mit Transportdauer T-12, dann mit der zweiten Transporteinrichtung 108-2 von der zweiten Fertigungszelle 106-2 zur dritten Fertigungszelle 106-3 mit Transportdauer T-23, dann mit der dritten Transporteinrichtung 108-2 von der dritten Fertigungszelle 106-3 zur vierten Fertigungszelle 106-4 mit Transportdauer T-34. Das Werkstück wird während der Bearbeitungsdauer T-4 auf die vierte Transporteinrichtung 108-4 bewegt.

Eine Gesamtbearbeitungsdauer in diesem Fall beträgt T = T1 + T12 + T2 + T23 + T3 + T34 + T4.

Für andere Reihenfolgen des Werkstücks wird die Gesamtbearbeitungsdauer ebenfalls bestimmt. Nicht sinnvolle Reihenfolgen, d.h. Reihenfolgen, die nicht zurBearbeitung des Werkstücks mit allen im jeweiligen Schnittplan vorgegebenen Eigenschaften führen, werden beispielsweise nicht berücksichtigt.

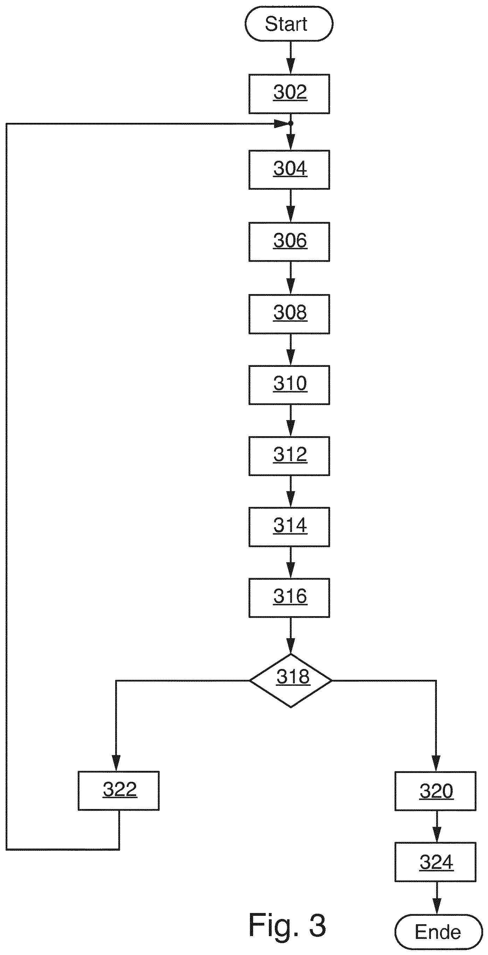

In Figur 3 ist ein Verfahren zur Bearbeitung von Werkstücken dargestellt. Das Verfahren wird beispielweise von einer Gesamtanwendung gesteuert, die in der Speicherprogrammierbaren Steuerung abläuft. Die Fertigungszellen 106-1, ..., 106-4 werden im Beispiel als Module der Gesamtanwendung modelliert. Die Werkstücke werden nach einem Fertigungsauftrag gefertigt, der in der Speicherprogrammierten Steuerung abgespeichert ist. Abhängig von dem Fertigungsauftrag werden die Fertigungsanweisungen wie folgt bestimmt.

In einem Schritt 302 erfolgt eine Initialisierung der Gesamtanwendung für die Optimierung eines Fertigungsauftrags. Dann wird ein Schritt 304 ausgeführt.

Im Schritt 304 erfolgt eine Initialisierung der Module für eine Bewertung einer Lösung aus Sicht einer einzelnen Fertigungszelle 106-1, ..., 106-4. Die Module werden dynamisch geladen. Die Module lesen Konfigurationsdaten der Fertigungszelle 106-1, ..., 106-4, die sie modellieren, ein und stellen diese für die spätere Lösungsbewertung zur Verfügung. Die Konfigurationsdaten umfassen die Fertigungsparameter. Dann wird ein Schritt 306 ausgeführt.

Im Schritt 306 erfolgt eine Ermittlung einer Teilbewertung für die erste Fertigungszelle 106-1, im Beispiel das Lager. Dazu wird zusätzlich ein aktueller Zustand des Lagers aus einer Lagerdatenbank eingelesen. In der Lagerdatenbank ist Information über verfügbare Werkstücke, im Beispiel Platten, oder deren Reihenfolge in den Stapeln hinterlegt. Dann wird ein Schritt 308 ausgeführt.

Im Schritt 308 erfolgt eine Ermittlung einer Teilbewertung für die zweite Fertigungszelle 106-2. Im Beispiel erfolgt für die Säge eine Optimierung des Schnittplans. Alle zur Erfüllung des Fertigungsauftrags möglichen Schnittpläne werden beispielsweise miteinander bezüglich Verschnitt oder Durchlaufzeit verglichen. Die Optimierung erfolgt beispielsweise im Hinblick auf minimalen Verschnitt oder minimale Durchlaufzeit. Dann wird ein Schritt 310 ausgeführt.

Im Schritt 310 erfolgt eine Ermittlung einer Teilbewertung für die dritte Fertigungszelle 106-3. Im Beispiel erfolgt für die Abstapeleinrichtung eine Berechnung möglicher Teileströme für mögliche Schnittpläne. Dann wird ein Schritt 312 ausgeführt.

Im Schritt 312 erfolgt eine Ermittlung einer Teilbewertung für die vierte Fertigungszelle 106-4. Im Beispiel erfolgt für die Kanten-Bearbeitungs-Einrichtung eine Berechnung möglicher Kanten-Bearbeitungs-Reihenfolgen für mögliche Schnittpläne.

Dann wird ein Schritt 314 ausgeführt.

Im Schritt 314 werden aus den möglichen Schnittplänen und den möglichen Teileströmen zufällige Produktionsreihenfolgen erzeugt. Diese zufälligen Produktionsreihenfolgen führen zu verschiedenen Fertigungsanweisungen für die einzelnen Fertigungszellen 106-1, ..., 106-4 und verschiedenen Transportwege. Es müssen nicht alle Fertigungszellen 106-1, ..., 106-4 verwendet werden. Es kann auch vorgesehen sein, mehrmals zu unterschiedlichen Zeiten dieselbe Fertigungszelle 106-1, ..., 106-4 zu verwenden.

Als Lösung werden im Folgenden Produktionsreihenfolgen oder Fertigungsanweisungen bezeichnet, die das erwünschte Bearbeitungsergebnis erreichen.

Für die zu berücksichtigenden Fertigungszellen 106-1, ..., 106-4 oder die zu berücksichtigenden Fertigungsanweisungen werden die Teilbewertungen verwendet. Eine Fertigungszelle 106-1, ..., 106-4 kann eine oder mehrere Teilbewertungen zur Verfügung stellen. Die Ermittlung einer Teilbewertung erfolgt innerhalb des für die Fertigungszelle 106-1, ..., 106-4 zuständigen Moduls nach einem spezifischen Algorithmus, der den Bearbeitungsvorgang modelliert. Dabei werden die Fertigungsparameter berücksichtigt, die von der jeweiligen Fertigungszelle 106-1, ..., 106-4 übertragen wurden. Die Anfrage nach Fertigungsparametern einer der Fertigungszellen 106-1, ..., 106-4 kann dazu gesendet werden. Die Anfrage kann Information über verschiedenen Werkstücke oder Schnittpläne enthalten. In Erwiderung der Anfrage wird in diesem Fall beispielsweise Information über Fertigungsparameter für die verschiedenen Werkstücke übertragen. Es können auch historische Werte vorheriger Anfragen für die Fertigungsparameter verwendet werden. Dann wird ein Schritt 316 ausgeführt.

Im Schritt 316 wird eine Gesamtbewertung einer Lösung ermittelt, indem die Teilbewertungen gewichtet aggregiert werden. Über Gewichtungsfaktoren können Optimierungsziele festgelegt werden. D.h. im Beispiel werden als Teilbewertung die Bearbeitungsdauern und Transportdauern in verschiedenen Reihenfolgen der Bearbeitung und des Transport gewichtet bewertet. Die Bearbeitungsdauern und die passenden Transportdauern werden zu verschiedenen Gesamtbearbeitungsdauern kombiniert.

Der Fertigungsprozess kann hinsichtlich unterschiedlicher Zielgrößen optimiert werden.

### Maximierung Gesamtdurchsatz:

Die Fertigungsreihenfolge wird insbesondere hinsichtlich einer optimalen Bearbeitung in Fertigungszellen 106-1, ..., 106-4, die einen Engpass darstellen, zu Lasten von leistungsfähigen Fertigungszellen 106-1, ..., 106-4 optimiert. Hierdurch ergibt sich ein höherer Gesamtdurchsatz.

### Maximierung der durchschnittlichen Abstände zwischen Bedienerinteraktionen:

Die Fertigungsreihenfolge wird hinsichtlich von notwendige Anwesenheitszeiten von Bedienern an den Fertigungszellen 106-1, ..., 106-4 optimiert. Hierdurch können Aufgaben zusammengefasst und dadurch größere Freiräume für den Bediener für andere Tätigkeiten geschaffen werden.

Reduzierung Verschnitt:

Der Fertigungsprozess kann hinsichtlich einer Reduzierung des Verschnitts optimiert werden. Dies geht in der Regel zu Lasten des Durchsatzes.

Weitere mögliche Zielgrößen:
Reduzierung Energieverbrauch,
Reduzierung Werkzeug- und Maschinenverschleiß,
Reduzierung von Transportzeiten,
Reduzierung der Maschinennebenzeiten (Reduzierung von Stillstandszeiten bei Werkzeugwechselvorgängen, dadurch das werkzeugspezifische Aufträge zusammengefasst werden).

Vorzugsweise wird der wenigstens eine Fertigungsparameter gemäß einer vordefinierten weiteren Optimierungsgröße bestimmt. Die weitere Optimierungsgröße umfasst beispielsweise als Zielgrößen einen maximalen Gesamtdurchsatz, eine Minimierung von Ausschuss, insbesondere Verschnitt bei Werkstücken, eine Minimierung eines Energieverbrauchs und/oder eine Minimierung eines Werkzeug- oder Maschinenverschleißteils.

Die Gewichtung der einzelnen Zielgrößen kann vom Anwender vorgenommen werden. Der Fertigungsprozess kann damit z.B. in Abhängigkeit von der Auftragslage angepasst werden.

Dann wird ein Schritt 318 ausgeführt.

Im Schritt 318 wird geprüft, ob eine maximale Anzahl von Lösungsgenerationen erreicht ist. Die Optimierung wird beim Erreichen einer vorgegebenen Anzahl von Lösungsgenerationen beendet. Falls eine maximale Anzahl Lösungsgenerationen erreicht ist, wird ein Schritt 320 ausgeführt, anderenfalls wird ein Schritt 322 ausgeführt.

Im Schritt 322 wird eine neue Lösungsgeneration beispielsweise durch Anwendung von genetischen Operatoren (Kreuzung, Mutation) auf die vorhergehende Lösungsgeneration erzeugt. Bearbeitungsdauern und Transportdauern werden beispielsweise in verschiedenen Reihenfolgen der Bearbeitung und des Transports als neue Lösungsgeneration verwendet.

Für neue Lösungsgenerationen werden die Schritte 304 bis 318 wiederholt.

Im Schritt 320 erfolgt eine Auswahl der besten Lösung durch die Wahl der Lösung, die die beste Gesamtbewertung aus allen Lösungsgenerationen aufweist. Dann wird ein Schritt 324 ausgeführt.

Im Schritt 324 wird für die Reihenfolgen der Bearbeitung und des Transports der besten Lösung die Fertigungsanweisungen zur Fertigung der besten Lösung ausgebeben und an die Fertigungszellen 106-1 bis 106-4 übermittelt und die Fertigung gestartet.

Anschließend endet das Verfahren bis eine weitere Optimierung für einen weiteren Fertigungsauftrag gestartet wird.

Das Verfahren zum Bearbeiten von Werkstücken in mehreren voneinander räumlich beabstandeten und/oder verketteten Fertigungszellen 106-1, ..., 106-4 in einer vorgebbaren Reihenfolge, umfasst das Übertragen von Information über wenigstens einen Fertigungsparameter von wenigstens einer der mehreren Fertigungszellen 106-1, ..., 106-4. Der Fertigungsparameter kann als historischer Wert erfasst werden oder im laufenden Betrieb gemessen werden.

Die Fertigungsanweisung wird für wenigstens eine der mehreren Fertigungszellen 106-1, ..., 106-4 abhängig von dem wenigsten einen Fertigungsparameter bestimmt. Die Fertigungsanweisung gibt die Reihenfolge der Bearbeitung oder des Transports vor und wird an wenigstens eine der Fertigungszellen 106-1, ..., 106-4 übertragen.

## Patentansprüche

1. Vorrichtung zur Bearbeitung von Erzeugnissen in Form von plattenförmigen Werkstücken, mit einer Recheneinrichtung (102) und eine Schnittstelle (104), wobei die Schnittstelle (104) ausgebildet ist, mit mehreren voneinander räumlich beabstandeten und/oder verketten Fertigungszellen (106-1, ..., 106-4) zu kommunizieren, wobei die Fertigungszellen (106-1, ..., 106-4) zur Bearbeitung eines Erzeugnisses in einer vorgebbaren Fertigungsreihenfolge ausgebildet sind, wobei die Schnittstelle (104) ausgebildet ist, Information über wenigstens einen Fertigungsparameter von wenigstens einer der mehreren Fertigungszellen (106-1, ..., 106-4) zu empfangen, wobei die Recheneinrichtung (102) ausgebildet ist, abhängig vom wenigstens einen Fertigungsparameter eine Fertigungsanweisung für wenigstens eine der mehreren Fertigungszellen (106-1, ..., 106-4) gemäß einer vordefinierten Optimierungsgröße zu bestimmen, **dadurch gekennzeichnet, dass** die Optimierungsgröße eine Maximierung durchschnittlicher Abstände zwischen Bedienerinteraktionen umfasst, wobei die Fertigungsreihenfolge hinsichtlich von notwendigen Anwesenheitszeiten von Bedienern an den Fertigungszellen (106-1, ..., 106-4) optimiert wird und wobei die Fertigungsanweisung die Fertigungsreihenfolge vorgibt und die Schnittstelle (104) ausgebildet ist, Informationen über die wenigstens eine Fertigungsanweisung zur Vorgabe der Fertigungsreihenfolge an die Fertigungszellen (106-1, ..., 106-4) zu übertragen und die Fertigungszellen (106-1, ..., 106-4) ausgebildet sind, die Fertigungsanweisung nach Erhalt umzusetzen, und dass die Erzeugnisse plattenförmige Werkstücke sind.

2. Vorrichtung nach Anspruch 1, **dadurch gekennzeichnet, dass**, die Optimierungsgröße ferner einen maximalen Gesamtdurchsatz, eine Minimierung von Ausschuss, insbesondere Verschnitt bei Werkstücken, eine Minimierung eines Energieverbrauchs und/oder eine Minimierung eines Werkzeug- oder Maschinenverschleißteils umfasst.

3. Vorrichtung nach Anspruch 1 oder 2, **dadurch gekennzeichnet, dass** die Schnittstelle (104) ausgebildet ist, eine Anfrage an wenigstens eine der mehreren Fertigungszellen (106-1, ..., 106-4) zu übertragen, mit der Information über den wenigstens einen Fertigungsparameter von der wenigstens einen der mehreren Fertigungszellen (106-1, ..., 106-4) angefordert wird.

4. Vorrichtung nach einem der Ansprüche 1 bis 3, **dadurch gekennzeichnet, dass** die Fertigungsanweisung die Fertigungsreihenfolge bestimmt, in der das Erzeugnis innerhalb einer der mehreren Fertigungszellen (106-1, ..., 106-4) bearbeitet wird, oder eine Fertigungszellen-Reihenfolge in der das Erzeugnis durch die mehreren Fertigungszellen (106-1, ..., 106-4) bearbeitet wird.

5. Vorrichtung nach einem der Ansprüche 1 bis 4, **dadurch gekennzeichnet, dass** die Fertigungsanweisung eine Bearbeitungsreihenfolge von wenigstens zwei verschiedenen Erzeugnissen innerhalb einer der mehreren Fertigungszellen oder durch die mehreren Fertigungszellen (106-1, ..., 106-4) bestimmt.

6. Vorrichtung nach Anspruch 3, **dadurch gekennzeichnet, dass** die Anfrage Information über die wenigstens zwei verschiedenen Erzeugnisse umfasst, wobei in Erwiderung der Anfrage Information über Fertigungsparameter für die wenigstens zwei verschiedenen Erzeugnisse übertragen wird.

7. Vorrichtung nach einem der Ansprüche 1 bis 6, **dadurch gekennzeichnet, dass** der Fertigungsparameter Information über eine Fertigungsdauer für eine Bearbeitung des Erzeugnisses umfasst.

8. Vorrichtung nach einem der Ansprüche 1 bis 7, **dadurch gekennzeichnet, dass** die Fertigungsanweisung Information über einen Fertigungsplan für eine Bearbeitung des Erzeugnisses in wenigstens einer der mehreren Fertigungszellen umfasst.

9. Vorrichtung nach einem der Ansprüche 1 bis 8, **dadurch gekennzeichnet, dass** die Fertigungsanweisung abhängig von wenigstens einer Zeitdauer bestimmt wird, die eine Transportdauer zwischen zwei der mehreren Fertigungszellen (106-1, ..., 106-4) charakterisiert.

10. Vorrichtung nach einem der Ansprüche 1 bis 9, **dadurch gekennzeichnet, dass** die Schnittstelle (104) ausgebildet, Information über ein Ende einer ersten Bearbeitung des Erzeugnisses an einer ersten Fertigungszelle (106-1) zu empfangen, und Information über einen Beginn einer zweiten Bearbeitung des Erzeugnisses an einer zweiten Fertigungszelle (106-2) zu empfangen, wobei die Recheneinrichtung (102) ausgebildet ist die Zeitdauer in einem ersten Vorgang zur Bearbeitung eines ersten Erzeugnisses abhängig von der Information über das Ende und der Information über den Beginn zu messen, und die Zeitdauer zur Bestimmung der Fertigungsanweisung für ein zweites Erzeugnis in einem zweiten Vorgang zu verwenden

11. Vorrichtung nach einem der Ansprüche 1 bis 10, **dadurch gekennzeichnet, dass** die Schnittstelle (104) ausgebildet, Information über einen Beginn einer ersten Bearbeitung des Erzeugnisses an einer ersten Fertigungszelle (106-1) zu empfangen, und Information über ein Ende der ersten Bearbeitung des Erzeugnisses an der ersten Fertigungszelle (106-1) zu empfangen, wobei die Recheneinrichtung (102) ausgebildet ist die Fertigungsdauer in einem ersten Vorgang zur Bearbeitung eines ersten Erzeugnisses abhängig von der Information über den Beginn und der Information über das Ende zu messen, und die Fertigungsdauer zur Bestimmung der Fertigungsanweisung für ein zweites Erzeugnis in einem zweiten Vorgang zu verwenden.

12. Verfahren zum Bearbeiten von Erzeugnissen in mehreren voneinander räumlich beabstandeten und/oder verketteten Fertigungszellen (106-1, ..., 106-4) in einer vorgebbaren Fertigungsreihenfolge, umfassend
Übertragen von Information über wenigstens einen Fertigungsparameter von wenigstens einer der mehreren Fertigungszellen (106-1, ..., 106-4) an eine Schnittstelle (104) für eine Recheneinrichtung (102),
Bestimmen einer Fertigungsanweisung für wenigstens eine der mehreren Fertigungszellen (106-1, ..., 106-4) abhängig vom wenigstens einen Fertigungsparameter durch die Recheneinrichtung (102) gemäß einer vordefinierten Optimierungsgröße, **dadurch gekennzeichnet,**
**dass** die Optimierungsgröße eine Maximierung durchschnittlicher Abstände zwischen Bedienerinteraktionen umfasst,
**dass** die Fertigungsreihenfolge hinsichtlich von notwendigen Anwesenheitszeiten von Bedienern an den Fertigungszellen (106-1, ..., 106-4) optimiert wird, dass die Fertigungsanweisung die Fertigungsreihenfolge vorgibt,
**dass** Informationen über die wenigstens eine Fertigungsanweisung zur Vorgabe der Fertigungsreihenfolge an die Fertigungszellen (106-1, ..., 106-4) übertragen werden,
**dass** die Fertigungszellen (106-1, ..., 106-4) die Fertigungsanweisung nach Erhalt umzusetzen
und **dass** die Erzeugnisse plattenförmige Werkstücke sind.

13. Verfahren nach Anspruch 12, **dadurch gekennzeichnet, dass** die Optimierungsgröße ferner einen maximalen Gesamtdurchsatz, eine Minimierung von Ausschuss, insbesondere Verschnitt bei Werkstücken, eine Minimierung eines Energieverbrauchs und/oder eine Minimierung eines Werkzeug- oder Maschinenverschleißteils umfasst.

14. Verfahren nach Anspruch 12, **dadurch gekennzeichnet, dass** eine Anfrage von der Schnittstelle (104) an wenigstens eine der mehreren Fertigungszellen (106-1, ..., 106-4) übertragen wird, mit der Information über den wenigstens einen Fertigungsparameter von der wenigstens einen der mehreren Fertigungszellen (106-1, ..., 106-4) angefordert wird.

15. Verfahren nach einem der Ansprüche 12 bis 14, **dadurch gekennzeichnet, dass** die Fertigungsanweisung die Fertigungsreihenfolge in der das Erzeugnis innerhalb einer der mehreren Fertigungszellen (106-1, ..., 106-4) bearbeitet wird oder eine Fertigungszellen-Reihenfolge in der das Erzeugnis durch die mehreren Fertigungszellen (106-1, ..., 106-4) bearbeitet wird bestimmt.

16. Verfahren nach einem der Ansprüche 12 bis 15, **dadurch gekennzeichnet, dass** die Fertigungsanweisung eine Bearbeitungsreihenfolge von wenigstens zwei verschiedenen Erzeugnissen innerhalb einer der mehreren Fertigungszellen (106-1, ..., 106-4) oder durch die mehreren Fertigungszellen (106-1, ..., 106-4) bestimmt.

17. Verfahren nach Anspruch 14, **dadurch gekennzeichnet, dass** die Anfrage Information über die wenigstens zwei verschiedenen Erzeugnisse umfasst, wobei in Erwiderung der Anfrage Information über Fertigungsparameter für die wenigstens zwei verschiedenen Erzeugnisse übertragen wird.

18. Verfahren nach einem der Ansprüche 12 bis 17, **dadurch gekennzeichnet, dass** der Fertigungsparameter Information über eine Fertigungsdauer für eine Bearbeitung des Erzeugnisses umfasst.

19. Verfahren nach einem der Ansprüche 12 bis 18, **dadurch gekennzeichnet, dass** die Fertigungsanweisung Information über einen Fertigungsplan für eine Bearbeitung des Erzeugnisses in wenigstens einer der mehreren Fertigungszellen (106-1, ..., 106-4) umfasst.

20. Verfahren nach einem der Ansprüche 12 bis 19, **dadurch gekennzeichnet, dass** die Fertigungsanweisung abhängig von wenigstens einer Zeitdauer bestimmt, die eine Transportdauer zwischen zwei der mehreren Fertigungszellen charakterisiert wird.

21. Verfahren nach einem der Ansprüche 12 bis 20, **dadurch gekennzeichnet, dass** an der Schnittstelle (104) Information über ein Ende einer ersten Bearbeitung des Erzeugnisses an einer ersten Fertigungszelle (106-1) empfangen wird, wobei an der Schnittstelle (104) Information über einen Beginn einer zweiten Bearbeitung des Erzeugnisses an einer zweiten Fertigungszelle (106-2) empfangen wird, wobei die Zeitdauer von der Recheneinrichtung (102) in einem ersten Vorgang zur Bearbeitung eines ersten Erzeugnisses abhängig von der Information über das Ende und der Information über den Beginn gemessen wird, und wobei die Zeitdauer zur Bestimmung der Fertigungsanweisung für ein zweites Erzeugnis in einem zweiten Vorgang verwendet wird.

22. Verfahren nach einem der Ansprüche 12 bis 21, **dadurch gekennzeichnet, dass** an der Schnittstelle (104) Information über einen Beginn einer ersten Bearbeitung des Erzeugnisses an einer ersten Fertigungszelle (106-1) empfangen wird, wobei an der Schnittstelle (104) Information über ein Ende der ersten Bearbeitung des Erzeugnisses an der ersten Fertigungszelle (106-1) empfangen wird, wobei der Fertigungsdauer von der Recheneinrichtung (102) in einem ersten Vorgang zur Bearbeitung eines ersten Erzeugnisses abhängig von der Information über den Beginn und der Information über das Ende gemessen wird, und wobei die Fertigungsdauer zur Bestimmung der Fertigungsanweisung für ein zweites Erzeugnis in einem zweiten Vorgang verwendet wird.

23. Computerprogrammprodukt, **dadurch gekennzeichnet, dass** das Computerprogrammprodukt Instruktionen enthält, wonach ein Computer die Verfahrensschritte nach einem der Ansprüche 12 bis 22 ausführt.

## Claims

1. Device for processing products in the form of planar workpieces, having a computing apparatus (102) and an interface (104), wherein the interface (104) is configured to communicate with a plurality of spatially spaced apart and/or interlinked manufacturing cells (106-1, ..., 106-4), wherein the manufacturing cells (106-1, ..., 106-4) are configured to process a product in a predeterminable manufacturing sequence, wherein the interface (104) is configured to receive information about at least one manufacturing parameter from at least one of the plurality of manufacturing cells (106-1, ..., 106-4), wherein the computing apparatus (102) is configured, depending on the at least one manufacturing parameter, to determine a manufacturing instruction for at least one of the plurality of manufacturing cells (106-1, ..., 106-4) in accordance with a predefined optimization variable, **characterized in that** the optimization variable comprises a maximization of average distances between operator interactions, wherein the manufacturing sequence is optimized with regard to necessary attendance times of operators at the manufacturing cells (106-1, ..., 106-4) and wherein the manufacturing instruction specifies the manufacturing sequence and the interface (104) is configured to transmit information about the at least one manufacturing instruction for specifying the manufacturing sequence to the manufacturing cells (106-1, ..., 106-4) and the manufacturing cells (106-1, ..., 106-4) are configured to implement the manufacturing instruction upon receipt, **and in that** the products are planar workpieces.

2. Device according to claim 1, **characterized in that** the optimization variable further comprises a maximum total throughput, a minimization of rejects, in particular offcuts from workpieces, a minimization of energy consumption and/or a minimization of a tool or machine wear part.

3. Device according to claim 1 or 2, **characterized in that** the interface (104) is configured to transmit a request to at least one of the plurality of manufacturing cells (106-1, ..., 106-4), requesting information about the at least one manufacturing parameter from the at least one of the plurality of manufacturing cells (106-1, ..., 106-4).

4. Device according to any of claims 1 to 3, **characterized in that** the manufacturing instruction determines the manufacturing sequence in which the product is processed within one of the plurality of manufacturing cells (106-1, ..., 106-4), or a manufacturing cell sequence in which the product is processed by the plurality of manufacturing cells (106-1, ..., 106-4).

5. Device according to any of claims 1 to 4, **characterized in that** the manufacturing instruction determines a processing sequence of at least two different products within one of the plurality of manufacturing cells or through the plurality of manufacturing cells (106-1, ..., 106-4).

6. Device according to claim 3, **characterized in that** the request comprises information about the at least two different products, wherein information about manufacturing parameters for the at least two different products is transmitted in response to the request.

7. Device according to any of claims 1 to 6, **characterized in that** the manufacturing parameter comprises information about a manufacturing duration for a processing of the product.

8. Device according to any of claims 1 to 7, **characterized in that** the manufacturing instruction comprises information about a manufacturing plan for a processing of the product in at least one of the plurality of manufacturing cells.

9. Device according to any of claims 1 to 8, **characterized in that** the manufacturing instruction is determined depending on at least one time duration which characterizes a transport duration between two of the plurality of manufacturing cells (106-1, ..., 106-4).

10. Device according to any of claims 1 to 9, **characterized in that** the interface (104) is configured to receive information about an end of a first processing of the product at a first manufacturing cell (106-1), and to receive information about a start of a second processing of the product at a second manufacturing cell (106-2), wherein the computing apparatus (102) is configured to measure the time duration in a first operation for processing a first product depending on the information about the end and the information about the start, and to use the time duration to determine the manufacturing instruction for a second product in a second operation.

11. Device according to any of claims 1 to 10, **characterized in that** the interface (104) is configured to receive information about a start of a first processing of the product at a first manufacturing cell (106-1), and to receive information about an end of the first processing of the product at the first manufacturing cell (106-1), wherein the computing apparatus (102) is configured to measure the manufacturing duration in a first operation for processing a first product depending on the information about the start and the information about the end, and to use the manufacturing duration to determine the manufacturing instruction for a second product in a second operation.

12. Method for processing products in a plurality of spatially spaced apart and/or interlinked manufacturing cells (106-1, ..., 106-4) in a predeterminable manufacturing sequence, comprising
transmission of information about at least one manufacturing parameter from at least one of the plurality of manufacturing cells (106-1, ..., 106-4) to an interface (104) for a computing apparatus (102),
determination of a manufacturing instruction for at least one of the plurality of manufacturing cells (106-1, ..., 106-4) depending on the at least one manufacturing parameter by the computing apparatus (102) in accordance with a predefined optimization variable, **characterized in**
**that** the optimization variable comprises a maximization of average distances between operator interactions,
**in that** the manufacturing sequence is optimized with regard to necessary attendance times of operators at the manufacturing cells (106-1, ..., 106-4), **in that** the manufacturing instruction specifies the manufacturing sequence,
**in that** information about the at least one manufacturing instruction for specifying the manufacturing sequence is transmitted to the manufacturing cells (106-1, ..., 106-4),
**in that** the manufacturing cells (106-1, ..., 106-4) implement the manufacturing instruction upon receipt
**and in that** the products are planar workpieces.

13. Method according to claim 12, **characterized in that** the optimization variable further comprises a maximum total throughput, a minimization of rejects, in particular offcuts from workpieces, a minimization of energy consumption and/or a minimization of a tool or machine wear part.

14. Method according to claim 12, **characterized in that** a request is transmitted from the interface (104) to at least one of the plurality of manufacturing cells (106-1, ..., 106-4), requesting information about the at least one manufacturing parameter from the at least one of the plurality of manufacturing cells (106-1, ..., 106-4).

15. Method according to any of claims 12 to 14, **characterized in that** the manufacturing instruction determines the manufacturing sequence in which the product is processed within one of the plurality of manufacturing cells (106-1, ..., 106-4), or a manufacturing cell sequence in which the product is processed by the plurality of manufacturing cells (106-1, ..., 106-4).

16. Method according to any of claims 12 to 15, **characterized in that** the manufacturing instruction determines a processing sequence of at least two different products within one of the plurality of manufacturing cells (106-1, ..., 106-4) or through the plurality of manufacturing cells (106-1, ..., 106-4).

17. Method according to claim 14, **characterized in that** the request comprises information about the at least two different products, wherein information about manufacturing parameters for the at least two different products is transmitted in response to the request.

18. Method according to any of claims 12 to 17, **characterized in that** the manufacturing parameter comprises information about a manufacturing duration for a processing of the product.

19. Method according to any of claims 12 to 18, **characterized in that** the manufacturing instruction comprises information about a manufacturing plan for a processing of the product in at least one of the plurality of manufacturing cells (106-1, ..., 106-4).

20. Method according to any of claims 12 to 19, **characterized in that** the manufacturing instruction is determined depending on at least one time duration which characterizes a transport duration between two of the plurality of manufacturing cells.

21. Method according to any of claims 12 to 20, **characterized in that** information about an end of a first processing of the product at a first manufacturing cell (106-1) is received at the interface (104), wherein information about a start of a second processing of the product at a second manufacturing cell (106-2) is received at the interface (104), wherein the time duration is measured by the computing apparatus (102) in a first operation for processing a first product depending on the information about the end and the information about the start, and wherein the time duration is used to determine the manufacturing instruction for a second product in a second operation.

22. Method according to any of claims 12 to 21, **characterized in that** information about a start of a first processing of the product at a first manufacturing cell (106-1) is received at the interface (104), wherein information about an end of the first processing of the product at the first manufacturing cell (106-1) is received at the interface (104), wherein the manufacturing duration is measured by the computing apparatus (102) in a first operation for processing a first product depending on the information about the start and the information about the end, and wherein the manufacturing duration is used to determine the manufacturing instruction for a second product in a second operation.

23. Computer program product, **characterized in that** the computer program product contains instructions, according to which a computer executes the method steps according to any of claims 12 to 22.

## Revendications

1. Dispositif pour le traitement de produits sous forme de pièces à usiner en forme de plaques, avec un système de calcul (102) et une interface (104), dans lequel l'interface (104) est réalisée pour communiquer avec plusieurs cellules de fabrication (106-1, ..., 106-4) espacées les unes des autres et/ou enchaînées, dans lequel les cellules de fabrication (106-1, ..., 106-4) sont réalisées pour le traitement d'un produit dans un ordre de fabrication pouvant être prescrit, dans lequel l'interface (104) est réalisée pour recevoir des informations sur au moins un paramètre de fabrication d'au moins l'une de la pluralité de cellules de fabrication (106-1, ..., 106-4), dans lequel le système de calcul (102) est réalisé pour déterminer, en fonction d'au moins un paramètre de fabrication, une instruction de fabrication pour au moins l'une de la pluralité de cellules de fabrication (106-1, ..., 106-4) selon une grandeur d'optimisation prédéfinie, **caractérisé en ce que** la grandeur d'optimisation comprend une maximisation des distances moyennes entre les interactions des opérateurs, dans lequel l'ordre de fabrication est optimisé en ce qui concerne les temps de présence nécessaires des opérateurs aux cellules de fabrication (106-1, ..., 106-4) et dans lequel l'instruction de fabrication prescrit l'ordre de fabrication et l'interface (104) est réalisée pour transmettre aux cellules de fabrication (106-1, ..., 106-4) des informations sur l'au moins une instruction de fabrication pour prescrire l'ordre de fabrication et les cellules de fabrication (106-1, ..., 106-4) sont réalisées pour mettre en oeuvre l'instruction de fabrication après réception, et **en ce que** les produits sont des pièces à usiner en forme de plaques.

2. Dispositif selon la revendication 1, **caractérisé en ce que** la valeur d'optimisation comprend en outre un débit total maximal, une minimisation des rebuts, en particulier des chutes de pièces, une minimisation de la consommation d'énergie et/ou une minimisation de l'usure d'un outil ou d'une machine.

3. Dispositif selon la revendication 1 ou 2, **caractérisé en ce que** l'interface (104) est réalisée pour transmettre une requête à l'au moins une de la pluralité de cellules de fabrication (106-1, ..., 106-4), avec laquelle des informations sur l'au moins un paramètre de fabrication de l'au moins une de la pluralité de cellules de fabrication (106-1, ..., 106-4) sont demandées.

4. Dispositif selon l'une quelconque des revendications 1 à 3, **caractérisé en ce que** l'instruction de fabrication détermine l'ordre de fabrication dans lequel le produit est traité à l'intérieur de l'une de la pluralité de cellules de fabrication (106-1, ..., 106-4), ou un ordre de cellule de fabrication dans lequel le produit est traité par la pluralité de cellules de fabrication (106-1, ..., 106-4).

5. Dispositif selon l'une quelconque des revendications 1 à 4, **caractérisé en ce que** l'instruction de fabrication détermine un ordre de traitement d'au moins deux produits différents à l'intérieur de l'une de la pluralité de cellules de fabrication ou par la pluralité de cellules de fabrication (106-1, ..., 106-4).

6. Dispositif selon la revendication 3, **caractérisé en ce que** la requête comprend des informations sur les au moins deux produits différents, dans lequel des informations sur des paramètres de fabrication pour les au moins deux produits différents sont transmises en réponse à la requête.

7. Dispositif selon l'une quelconque des revendications 1 à 6, **caractérisé en ce que** le paramètre de fabrication comprend des informations sur une durée de fabrication pour un traitement du produit.

8. Dispositif selon l'une quelconque des revendications 1 à 7, **caractérisé en ce que** l'instruction de fabrication comprend des informations sur un plan de fabrication pour un traitement du produit dans au moins l'une de la pluralité de cellules de fabrication.

9. Dispositif selon l'une quelconque des revendications 1 à 8, **caractérisé en ce que** l'instruction de fabrication est déterminée en fonction d'au moins une durée qui caractérise une durée de transport entre deux de la pluralité de cellules de fabrication (106-1, ..., 106-4).

10. Dispositif selon l'une quelconque des revendications 1 à 9, **caractérisé en ce que** l'interface (104) est réalisée pour recevoir des informations sur une fin d'un premier traitement du produit au niveau d'une première cellule de fabrication (106-1) et pour recevoir des informations sur un début d'un deuxième traitement du produit au niveau d'une deuxième cellule de fabrication (106-2), dans lequel le système de calcul (102) est réalisé pour mesurer la durée dans une première opération de traitement d'un premier produit en fonction des informations sur la fin et des informations sur le début, et pour utiliser la durée pour déterminer l'instruction de fabrication pour un deuxième produit dans une deuxième opération

11. Dispositif selon l'une quelconque des revendications 1 à 10, **caractérisé en ce que** l'interface (104) est réalisée pour recevoir des informations sur un début d'un premier traitement du produit au niveau d'une première cellule de fabrication (106-1) et pour recevoir des informations sur une fin du premier traitement du produit au niveau de la première cellule de fabrication (106-1), dans lequel le système de calcul (102) est réalisé pour mesurer la durée de fabrication dans une première opération de traitement d'un premier produit en fonction des informations sur le début et des informations sur la fin, et pour utiliser la durée de fabrication pour déterminer l'instruction de fabrication d'un deuxième produit dans une deuxième opération.

12. Procédé de traitement de produits dans plusieurs cellules de fabrication (106-1, ..., 106-4) espacées les unes des autres et/ou enchaînées dans un ordre de fabrication pouvant être prescrit, comprenant
la transmission d'nformations sur au moins un paramètre de fabrication d'au moins une de la pluralité de cellules de fabrication (106-1, ..., 106-4) à une interface (104) pour un système de calcul (102),
la détermination d'une instruction de fabrication pour au moins l'une de la pluralité de cellules de fabrication (106-1, ..., 106-4) en fonction d'au moins un paramètre de fabrication par le système de calcul (102) selon une grandeur d'optimisation prédéfinie, **caractérisé**
**en ce que** la grandeur d'optimisation comprend une maximisation des distances moyennes entre les interactions des opérateurs,
**en ce que** l'ordre de fabrication est optimisé en ce qui concerne les temps de présence nécessaires d'opérateurs aux cellules de fabrication (106-1, ..., 106-4), en ce que l'instruction de fabrication prescrit l'ordre de fabrication,
**en ce que** des informations sur l'au moins une instruction de fabrication sont transmises aux cellules de fabrication (106-1, ..., 106-4) pour la prescription de l'ordre de fabrication,
**en ce que** les cellules de fabrication (106-1, ..., 106-4) mettent en oeuvre l'instruction de fabrication après réception
et que les produits sont des pièces à usiner en forme de plaque.

13. Procédé selon la revendication 12, **caractérisé en ce que** la grandeur d'optimisation comprend en outre un débit total maximal, une minimisation des rebuts, en particulier des chutes de pièces, une minimisation d'une consommation d'énergie et/ou une minimisation de l'usure d'un outil ou d'une machine.

14. Procédé selon la revendication 12, **caractérisé en ce qu'**une requête est transmise par l'interface (104) à au moins une de la pluralité de cellules de fabrication (106-1, ..., 106-4), avec laquelle des informations sur l'au moins un paramètre de fabrication de l'au moins une de la pluralité de cellules de fabrication (106-1, ..., 106-4) sont demandées.

15. Procédé selon l'une quelconque des revendications 12 à 14, **caractérisé en ce que** l'instruction de fabrication détermine l'ordre de fabrication dans lequel le produit est traité à l'intérieur de l'une de la pluralité de cellules de fabrication (106-1, ..., 106-4) ou un ordre de cellule de fabrication dans lequel le produit est traité par la pluralité de cellules de fabrication (106-1, ..., 106-4).

16. Procédé selon l'une quelconque des revendications 12 à 15, **caractérisé en ce que** l'instruction de fabrication détermine une séquence de traitement d'au moins deux produits différents à l'intérieur de l'une de la pluralité de cellules de fabrication (106-1, ..., 106-4) ou par la pluralité de cellules de fabrication (106-1, ..., 106-4).

17. Procédé selon la revendication 14, **caractérisé en ce que** la requête comprend des informations sur les au moins deux produits différents, dans lequel, en réponse à la requête, des informations sur des paramètres de fabrication pour les au moins deux produits différents sont transmises.

18. Procédé selon l'une quelconque des revendications 12 à 17, **caractérisé en ce que** le paramètre de fabrication comprend des informations sur une durée de fabrication pour un traitement du produit.

19. Procédé selon l'une quelconque des revendications 12 à 18, **caractérisé en ce que** l'instruction de fabrication comprend des informations sur un plan de fabrication pour un traitement du produit dans au moins une de la pluralité de cellules de fabrication (106-1, ..., 106-4).

20. Procédé selon l'une quelconque des revendications 12 à 19, **caractérisé en ce que** l'instruction de fabrication est déterminée en fonction d'au moins une durée qui caractérise une durée de transport entre deux de la pluralité de cellules de fabrication.

21. Procédé selon l'une quelconque des revendications 12 à 20, **caractérisé en ce que** l'interface (104) reçoit des informations sur une fin d'un premier traitement du produit au niveau d'une première cellule de fabrication (106-1), dans lequel l'interface (104) reçoit des informations sur un début d'un deuxième traitement du produit au niveau d'une deuxième cellule de fabrication (106-2), dans lequel la durée est mesurée par le système de calcul (102) dans une première opération pour le traitement d'un premier produit en fonction des informations sur la fin et des informations sur le début, et dans lequel la durée est utilisée pour déterminer l'instruction de fabrication pour un deuxième produit dans une deuxième opération.

22. Procédé selon l'une quelconque des revendications 12 à 21, **caractérisé en ce que** l'interface (104) reçoit des informations sur un début d'un premier traitement du produit au niveau d'une première cellule de fabrication (106-1), dans lequel l'interface (104) reçoit des informations sur une fin du premier traitement du produit au niveau de la première cellule de fabrication (106-1), dans lequel la durée de fabrication est mesurée par le système de calcul (102) dans une première opération pour le traitement d'un premier produit en fonction des informations sur le début et des informations sur la fin, et dans lequel la durée de fabrication est utilisée pour déterminer l'instruction de fabrication pour un deuxième produit dans une deuxième opération.

23. Produit de programme d'ordinateur, **caractérisé en ce que** le produit de programme d'ordinateur contient des instructions selon lesquelles un ordinateur exécute les étapes de procédé selon l'une quelconque des revendications 12 à 22.
